# EUROPÄISCHE PATENTSCHRIFT

(11) **EP 4 063 704 B1**
(45) Veröffentlichungstag und Bekanntmachung des Hinweises auf die Patenterteilung: **01.05.2024**
(21) Anmeldenummer: 21164314.3
(22) Anmeldetag: 23.03.2021
(51) Int. Cl.: F16L 27/11

(54) **KOMPENSATOR**
COMPENSATOR
COMPENSATEUR

(43) Veröffentlichungstag der Anmeldung: 28.09.2022
(73) Patentinhaber: Georg Fischer Rohrleitungssysteme AG, 8201 Schaffhausen (CH)
(72) Erfinder: Wermelinger, Jörg, 8200 Schaffhausen (CH)
(74) Vertreter: Fenner, Seraina

(56) Entgegenhaltungen:
- DE-C2- 19 908 012
- US-A1- 2008 231 046
- US-B2- 7 147 007

## Beschreibung

Die Erfindung betrifft einen Kompensator zum Verbinden von zwei Kunststoffrohrleitungsenden, wobei der Kompensator eine zylindrische Bauform mit unterschiedlichen Aussendurchmessern aufweist, beinhaltend zwei Anschlussstutzen an den sich gegenüberliegenden Enden mit einem Aussendurchmesser und einer Wanddicke, wobei der Aussendurchmesser und die Wanddicke den Nennmassen der anzuschliessenden Rohrleitungsenden entsprechen, und einen flexiblen Bereich zwischen den beiden Anschlussstutzen.

Solche Kompensatoren dienen der Aufnahme seitlichen bzw. axialen Versatzes sowie Winkelabweichungen und leichten Längenveränderungen der miteinander zu verbindenden Rohrleitungsenden.

Die DE 199 08 012 C2, US 7 147 007 B2 und US 2008/231046 A1 offenbaren ein wellenförmiges Rohr, welches zum Verbinden von Rohrleitungen geeignet ist.

Aus dem Stand der Technik sind Kompensatoren für Rohrleitungen bekannt, die meist in der Mitte einen gewellten Balg, der einen leicht grösseren Aussendurchmesser im Verhältnis zu den angeschlossenen Rohrleitungsenden aufweist, jedoch eine konstante Wanddicke am Balg vorhanden ist. Dieses Design ermöglicht axialen und/oder Winkelabweichungen aufzunehmen. Solche Kompensatoren halten dem geforderten Innendruck stand, sind aber noch sehr steif und es lässt sich kaum ein Versatz damit aufnehmen. Ein zweites Design nutzt Elastomer als Werkstoff und besteht meisten nur aus einem Balg. Ist dieser so auslegt, dass er flexibel ist hat er im Gegenzug eine reduzierte Druckfestigkeit fürs Druckmedium. Beide Designs helfen bei Kunststoffrohrleitungen nicht die geforderte Aufgabe zu erfüllen.

Es ist Aufgabe der Erfindung einen Kompensator vorzuschlagen, der einen axialen Versatz und/oder eine Winkelauslenkung von zwei miteinander zu verbindenden Rohrleitungen aufnimmt sowie dem geforderten Innendruck standhält bzw. etwa demselben Innendruck wie die Rohrleitung selbst, ohne dass grosse Kräfte aufgewendet werden müssen um die benötigte Auslenkung des Kompensators zu erzielen.

Diese Aufgabe wird erfindungsgemäss dadurch gelöst, dass der flexible Bereich mehrere flexible Elemente aufweist, die nacheinander angeordnet sind und jeweils eine Beabstandung zueinander aufweisen, wobei die flexiblen Elemente über Verbindungselemente miteinander verbunden sind, wobei die Verbindungselemente einen Aussendurchmesser und eine radiale Wanddicke aufweisen, wobei die flexiblen Elemente einen Aussendurchmesser, eine radiale Wanddicke und eine axiale Wanddicke aufweisen, wobei der Aussendurchmesser der flexiblen Elemente grösser ist als die Aussendurchmesser der Anschlussstutzen und der Verbindungselemente, wobei der Kompensator einteilig und aus ein und demselben Material ausgebildet ist, wobei das Material Kunststoff ist.

Der Kunststoff weist vorzugsweise eine Streckdehnung zwischen 2 und 11% auf.

Vorzugsweise weist der Kompensator dasselbe Material auf, wie die anzuschliessenden Rohrleitungsenden oder Fittings. Dies ermöglicht eine optimale Verschweissung der Komponenten miteinander.

Es ist vorteilhaft, wenn die axiale Wanddicke in radialer Richtung eine unterschiedliche Dicke aufweist, vorzugsweise gegen innen abnehmend in der Dicke ist. Dies erhöht die Flexibilität des erfindungsgemässen Kompensators behält aber die radiale bzw. tangentiale Steifigkeit bei.

Der erfindungsgemässe Kompensator dient dem Verbinden von zwei Kunststoffrohrleitungsenden mit einem axialen Versatz und/oder einer Winkelauslenkung zueinander oder wo sich eine solche Verschiebung der Rohrleitung während des Betriebs einstellen kann. Der erfindungsgemässe Kompensator weist eine zylindrische Bauform mit unterschiedlichen Aussendurchmessern auf. Der Kompensator beinhaltet zwei Anschlussstutzen, wobei die Anschlussstutzen an den gegenüberliegenden Enden des Kompensators angeordnet sind und mit den Rohrleitungen verbunden werden. Die Anschlussstutzen weisen einen Aussendurchmesser und einer Wanddicke auf, wobei der Aussendurchmesser der Anschlussstutzen und deren Wanddicke den Nennmassen der anzuschliessenden Rohrleitungsenden entsprechen bzw. dem Nenndurchmesser und der Nennwanddicke der Rohrleitungsenden, welche mit dem Kompensator verbunden werden. Zwischen den beiden Anschlussstutzen weist der erfindungsgemässe Kompensator einen flexiblen Bereich auf. Der flexible Bereich weist mehrere flexible Elemente auf, die nacheinander angeordnet sind und jeweils eine Beabstandung zueinander aufweisen. Die flexiblen Elemente sind über Verbindungselemente miteinander verbunden bzw. gehen abwechselnd ineinander über. Die Verbindungselemente und die flexiblen Elemente weisen jeweils einen unterschiedlichen Aussendurchmesser und eine unterschiedliche radiale Wanddicken auf. Der Aussendurchmesser der flexiblen Elemente ist grösser als der Aussendurchmesser der Verbindungselemente und der Anschlussstutzen. Der erfindungsgemässe Kompensator ist einteilig bzw. einstückig und aus ein und demselben Material ausgebildet, wobei das Material ein Kunststoff ist.

Vorzugsweise ist der Kunststoff schweissbar, speziell bevorzugte Kunststoffe sind Polyethylen PE, Polypropylen PP, aber auch Rohrleitungsmaterialien wie PVC, ABS, ECTFE, PVDF und Polybuten sind denkbar.

Der erfindungsgemässe Kompensator weist vorzugsweise einen fortlaufenden Konturverlauf auf, bzw. die Elemente wie die flexiblen Elemente, Verbindungselemente und Anschlussstutzen gehen nahtlos ineinander über und bilden ein Teil. Durch den erfindungsgemässen Kompensator wird eine genügend hohe Druckfestigkeit und eine flexible Auslenkung erzielt.

Es ist vorteilhaft wenn der Kompensator eine geometrisch bestimmte Formgebung aufweist und eine stabile Bauform hat. Dadurch wird der Innendruck gezielt verteilt, so dass die radialen Wanddicken entlastet und die Umfangsspannungen reduziert werden. Bevorzugterweise sind alle Masse des Kompensators in einem Verhältnis zum Nenndurchmesser des anzuschliessenden Rohrleitungsendes und dessen Wanddicke ausgelegt bzw. zum Aussendurchmesser des Anschlussstutzens und dessen Wanddicke da diese den Nennmassen der anzuschliessenden Rohrenden entsprechen.

Die Anschlussstutzen sind vorzugsweise als Stutzen zum Verbinden mittels Stumpfschweissung ausgebildet, wobei auch eine Verbindung mittels Elektroschweissmuffen zwischen den Anschlussstutzen des Kompensators und den Rohrenden denkbar ist. Sowie eine mögliche Variante auch sein könnte, dass die Elektroschweissmuffe direkt am Kompensator integriert ist.

Vorzugsweise sind im flexiblen Bereich mindestens drei flexible Elemente angeordnet, vorzugsweise sind vier bis acht flexible Elemente im flexiblen Bereich angeordnet. Durch diese Anzahl von flexiblen Elementen wird eine genügende Flexibilität erreicht um auftretende Versatze und oder Winkelabweichungen aufnehmen zu können.

Es ist vorteilhaft wenn der fortlaufende Konturverlauf, bzw. die Elemente wie die flexiblen Elemente, Verbindungselemente und Anschlussstutzen nahtlos ineinander übergehen, wobei die Übergänge von Aussendurchmessern und axialangrenzende Flächen durch Radien gebildet werden. Das heisst, dass es zu bevorzugen ist wenn die Übergänge bzw. fiktiven Kanten zwischen den Durchmessern und den axial angrenzenden Flächen mittels Radien abgerundet sind.

Als bevorzugte Ausführungsform hat sich gezeigt, wenn der Innendurchmesser des erfindungsgemässen Kompensators konstant über die komplette Länge des Kompensators gleich gross ist. Dadurch können Verengungen vermieden werden und demzufolge auch ungewollte Innendruckerhöhungen im Kompensator.

Als vorteilhaft hat sich gezeigt, wenn die Aussendurchmesser der flexiblen Elemente gleich gross sind bzw. alle im flexiblen Bereich angeordneten flexiblen Elemente denselben Aussendurchmesser aufweisen. Dies ermöglicht eine einfache Herstellung des Kompensators.

Vorzugsweise entspricht der Aussendurchmesser des flexiblen Elementes 1.3 bis 1.5-mal dem Aussendurchmesser des Anschlussstutzens (D = d (1.3 bis 1.5)). Der Aussendurchmesser des Anschlussstutzens des Kompensators entspricht wiederum dem Nenndurchmesser des anzuschliessenden Rohrleitungsendes. Berechnungen haben gezeigt, dass dieses Verhältnis die geforderte Druckfestigkeit mit sich bringt und auch die genügend hohe Flexibilität, um die benötigte Auslenkung des Kompensators zu erreichen.

Erfindungsgemäß entspricht die radiale Wanddicke des flexiblen Elements 0.1 bis 0.16-mal des Aussendurchmessers des flexiblen Elementes (eb = D (0.1 bis 0.16)).

Als bevorzugte Ausführungsform hat sich gezeigt, wenn die radiale Wanddicke des Verbindungselementes 0.5 bis 0.8-mal der Wanddicke des Anschlussstutens entspricht (ev = e (0.5 bis 0.5))

Vorzugsweise sind alle Radien gleich gross, so wie es vorteilhaft ist wenn die Radien der axialen Wanddicke der Wandung der flexiblen Elemente auf der Höhe des Innendurchmessers des Kompensators entsprechen.

Es ist vorteilhaft, wenn die Beabstandung zwischen den flexiblen Elementen 0.7 bis 1.7-mal der Wanddicke des Anschlussstutzens entspricht (b = e (0.7 bis 1.7)). Entsprechend des Faktors der zur Bestimmung der Beabstandung eingesetzt wird, ändert sich die Flexibilität des Kompensators. Selbstverständlich haben auch die anderen Wanddicke und Durchmesser des Kompensators einen Einfluss auf die Flexibilität und durch die Auslegung entsprechend den Anforderungen des Kompensators können die optimalen Verhältnisse der einzelnen Grössen aufeinander abgestimmt werden. Wobei die Auslegung eines erfindungsgemässen Kompensators vorzugsweise mittels eines Algorithmus ermittelt wird.

Als vorteilhaft hat sich gezeigt, wenn das flexible Element in axialer Richtung durch zwei nebeneinander angeordnete Wandungen und einen dazwischenliegenden Spalt gebildet ist. Die nebeneinanderliegenden Wandungen des flexiblen Elements sind über den Aussendurchmesser des flexiblen Elements und der entsprechenden Wanddicke miteinander verbunden.

Als vorteilhaft hat sich gezeigt, wenn der Spalt auf der Höhe des Innendurchmessers des Kompensators eine axiale Breite von 0.6 bis 1.6-mal die Wanddicke der Anschlussstutzen aufweist (s = e (0.6 bis 1.6)).

Ebenso als vorteilhaft hat sich gezeigt, wenn der Spalt konisch verläuft und gegen den Aussendurchmesser des flexiblen Elements hin abnehmend ist. Dies hat den Effekt, dass die Wandungen eines flexiblen Elements in ihrer Breite gegen den Aussendurchmesser hin, zunehmend sind. Vorzugsweise weist die Wandung auf der Höhe des Innendurchmessers des Kompensators eine Breite von 0.3 bis 0.6-mal der Wanddicke des Anschlussstutzens auf (ai = e (0.3 bis 0.6)). Die Breite der Wandung verbreitert sich bis zum äussersten Punkt des Spalts auf eine Breite die 0.4 bis 0.7-mal der Wanddicke des Anschlussstutzens entspricht. Die Breite des flexiblen Elements bleibt aber über die gesamte Höhe gleich, das heisst der Spalt im flexiblen Element verläuft konisch wie bereits oben erwähnt.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
Fig. 1 einen Längsschnitt durch einen erfindungsgemässen Kompensator ohne äussere Krafteinwirkung
Fig. 2 einen Längsschnitt durch einen erfindungsgemässen Kompensator gestaucht
Fig. 3 einen Längsschnitt durch einen erfindungsgemässen Kompensator gedehnt und
Fig. 4 einen Längsschnitt durch einen erfindungsgemässen Kompensator gebogen.

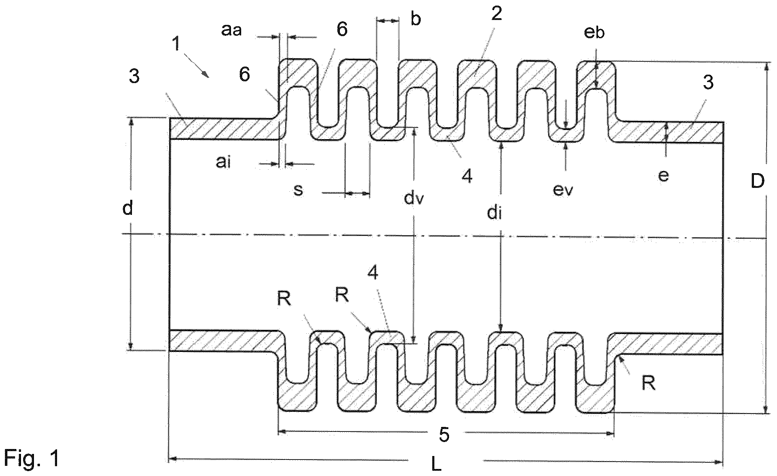

Die in Fig. 1 dargestellte Zeichnung zeigt einen erfindungsgemässen Kompensator 1 zum Verbinden von zwei Kunststoffrohrleitungsenden (nicht dargestellt). Der Kompensator 1 dient der Aufnahme eines axialen Versatzes und/oder einer Winkelauslenkung von zwei sich gegenüberliegenden Rohrenden oder wenn sich eine solche Verschiebung während des Betriebs einstellt. Der Kompensator 1 weist eine zylindrische Bauform mit unterschiedlichen Aussendurchmessern D, d, dv auf. Der Kompensator 1 beinhaltet zwei Anschlussstutzen 3, welche an den sich gegenüberliegenden Enden des Kompensators 1 angeordnet sind. Die Wanddicke e des Anschlussstutzens 3 entspricht der Wanddicke des anzuschliessenden Rohrendes sowie der Aussendurchmesser des Anschlussstutzens d dem Nenndurchmesser des anzuschliessenden Rohrendes entspricht. Zwischen den beiden Anschlussstutzen 3 ist ein flexibler Bereich 5 angeordnet. Der flexible Bereich 5 weist mehrere nebeneinander angeordnete flexible Elemente 2 auf, wobei diese voneinander mit einem Abstand d beabstandet zueinander sind. Die flexiblen Elemente 2 sind über ihren Innendurchmesser mittels Verbindungselement 4 miteinander verbunden. Die Verbindungselemente 4 weisen eine radiale Wanddicke ev auf und die flexiblen Elemente 2 weisen eine radiale Wanddicke eflex auf, wobei diese unterschiedlich breit ausgestaltet sind. Die flexiblen Elemente 2 weisen einen Aussendurchmesser D auf, wobei der Aussendurchmesser der flexiblen Elemente 2 grösser ist als der Aussendurchmesser des Anschlussstutzens 3 und der Verbindungselemente 4. Es ist vorteilhaft, wenn die Aussendurchmesser der jeweiligen Komponenten gleich gross ausgebildet sind. Der erfindungsgemässe Kompensator ist als einteiliges bzw. einstückiges Kunststoffteil ausgebildet, der aus ein und demselben Material hergestellt ist..

Es ist vorteilhaft, wenn der erfindungsgemässe Kompensator 1 eine geometrisch bestimmte Formgebung hat, das heisst, dass alle Masse des Kompensators genau definiert sind entsprechend der einzubauenden Rohrleitung (nicht dargestellt). Zudem weist der Kompensator 1 eine stabile Bauform auf und nicht wie aus dem Stand der Technik bekannt wo instabile Schlauchelemente das flexible Element des Kompensators bilden.

In der abgebildeten Ausführungsform weist der Kompensator 1 fünf nacheinander angeordnete flexible Elemente 2 auf, die mit einer Beabstandung b voneinander angeordnet sind, wobei die Beabstandung b 0.7 bis 1.7-mal der Wanddicke e des Anschlussstutzens bzw. des anzuschliessenden Rohrendes entspricht. Die flexiblen Elemente 2 sind konzentrisch zueinander angeordnet. Die radiale Wanddicke eb der flexiblen Elemente 2 entspricht 0.1 bis 0.16-mal dem Aussendurchmesser D der flexiblen Elemente 2, wobei dieser wiederum 1.3 bis 1.5-mal dem Aussendurchmesser d des Anschlussstutzens 3 entspricht. Aus der Fig. 1 ist auch gut ersichtlich, dass die Kontur bzw. der Konturverlauf des erfindungsgemässen Kompensators 1 fortlaufend ist und die Elemente bzw. Komponenten nahtlos ineinander übergehen. Vorzugsweise weist der Kompensator 1 einen Innendurchmesser di auf, der über die komplette Länge L des Kompensators 1 konstant gleich gross ist, wodurch Engstellen und dadurch entstehende, ungewollte Druckanstiege vermieden werden können. Der Aussendurchmesser dv der Verbindungselement 4 ist ebenfalls konstant gleich gross bei allen Verbindungelementen 4 die am Kompensator angeordnet sind bzw. die die flexiblen Elemente 2 miteinander verbinden. Die radiale Wanddicke ev entspricht 0.5 bis 0.8-mal der radialen Wanddicke e des Anschlussstutzens. Ein flexibles Element 2 weist zwei Wandungen 6 auf die durch einen Spalt s voneinander beabstandet sind, wobei der Spalt s konisch verläuft und gegen den Aussendurchmesser hin sich verjüngt, wodurch die Wandungen 6 sich verbreitern. Das hat den Effekt, dass die Wandungen aa auf der Höhe des Aussendurchmessers des Spalts eine Breite aufweist von 0.4 bis 0.7-mal die Wanddicke e und auf der Höhe des Innendurchmessers di eine Wanddicke ai mit einer Breite von 0.3 bis 0.6-mal der Wanddicke e. Die Breite des Spalts s entspricht auf der Höhe des Innendurchmessers di 0.6 bis 1.6-mal der Wanddicke e.

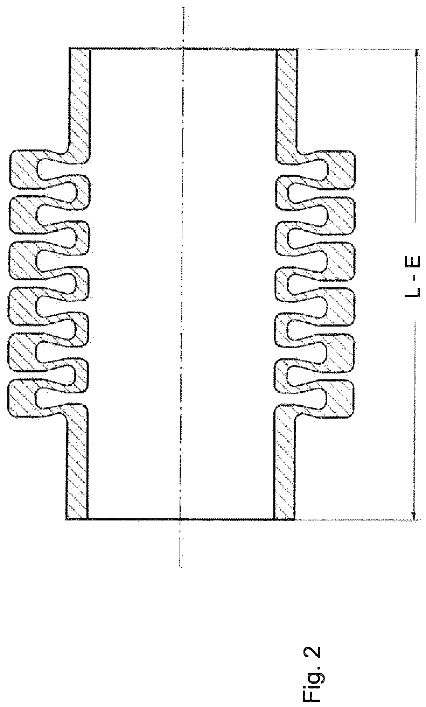

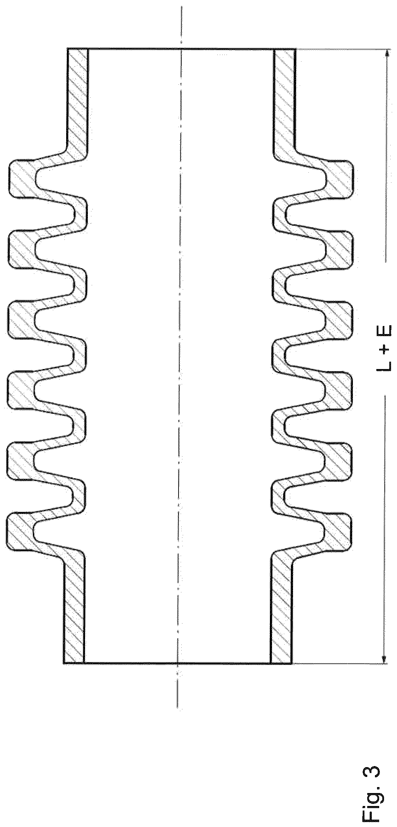

Fig. 3 zeigt einen Kompensator 1 bei dem sich die angeschlossene Rohrleitung verkürz hat und dadurch einen Zug auf den Kompensator 1 ausübt und so den Kompensator um ein Mass E dehnt. Die Fig. 2 zeigt das Gegenteil, einen erfindungsgemässen Kompensator 1 der gestaucht wird.

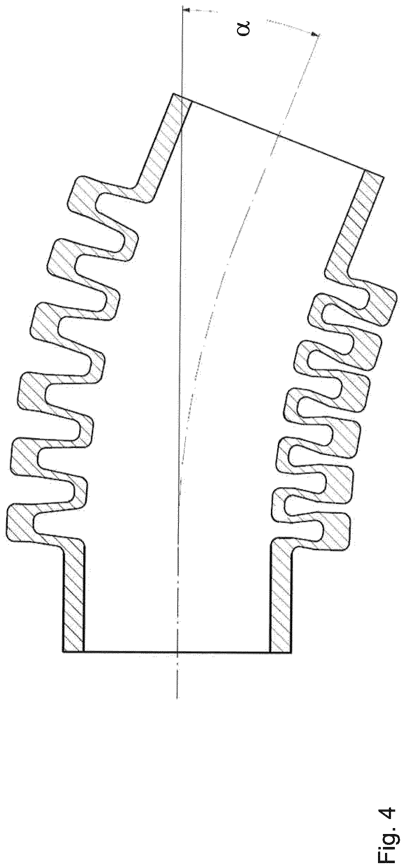

In der Fig. 4 ist ein erfindungsgemässer Kompensator ersichtlich der einen Winkelversatz der Rohrleitung aufnimmt indem der Kompensator 1 um einen Winkel α geneigt ist.

### Bezugszeichenliste

- 1: Kompensator
- 2: Flexibles Element
- 3: Anschlussstutzen
- 4: Verbindungselement
- 5: Flexibler Bereich
- 6: Wandung

- aa: axiale Wanddicke Höhe Aussendurchmesser Spalt: vorzugsweie (aa = (0.4 bis 0.7) e)
- ai: axiale Wanddicke Höhe Innendurchmesser di : vorzugsweise (ai = (0.3 bis 0.6) e)
- b: Beabstandung: vorzugsweise (b = (0.7 bis 1.7)
- e) e: Wanddicke Anschlussstutzen = Wanddicke anzuschliessendes Rohrende
- ev: Wanddicke Verbindungselement: vorzugsweise (ev = (0.5 bis 0.8) e)
- eb: radiale Wanddicke flexibles Element: vorzugsweise (eb = (0.1 bis 0.16) D)
- D: Aussendurchmesser flexibles Element: vorzugsweise (D = (1.3 bis 1.5) d)
- di: Innendurchmesser Kompensator: vorzugsweise Innendurchmesser Rohrleitung
- dv: Aussendurchmesser Verbindungselement (ergibt sich aus ev und di)
- s: Spalt: vorzugsweise (s = (0.6 bis 1.6) e)
- R: Radius vorzugsweise (R = ai)
- L: Länge des Kompensators unbelastet
- E: Verlängerung oder Verkürzung des Kompensators
- α: Biegung des Kompensators

## Patentansprüche

1. Kompensator (1) zum Verbinden von zwei Kunststoffrohrleitungsenden, wobei der Kompensator eine zylindrische Bauform mit unterschiedlichen Aussendurchmessern aufweist, beinhaltend zwei Anschlussstutzen an den sich gegenüberliegenden Enden, (3) mit einem Aussendurchmesser (d) und einer Wanddicke (e) wobei der Aussendurchmesser (d) und die Wanddicke (e) den Nennmassen der anzuschliessenden Rohrleitungsenden entsprechen, und einen flexiblen Bereich (5) zwischen den beiden Anschlussstutzen, wobei der flexible Bereich (5) mehrere flexible Elemente (2) aufweist, die nacheinander angeordnet sind und jeweils eine Beabstandung (b) zueinander aufweisen, wobei die flexiblen Elemente (2) über Verbindungselemente (4) miteinander verbunden sind, wobei die Verbindungselemente (4) einen Aussendurchmesser (dv) und eine radiale Wanddicke (ev) aufweisen, wobei die flexiblen Elemente (2) einen Aussendurchmesser (D), eine radiale Wanddicke (eb) und eine axiale Wanddicke (aa/ai) aufweisen, wobei der Aussendurchmesser (D) der flexiblen Elemente (2) grösser ist als die Aussendurchmesser (d, dv) der Anschlussstutzen (3) und der Verbindungselemente (4), wobei der Kompensator (1) einteilig und aus ein und demselben Material ausgebildet ist, wobei das Material Kunststoff ist **dadurch gekennzeichnet, dass** die radiale Wanddicke (eb) des flexiblen Elements (2) 0.1 bis 0.16-mal des Aussendurchmessers (D) des flexiblen Elements (2) entspricht (eb = D (0.1 bis 0.16)).

2. Kompensator (1) nach Anspruch 1, **dadurch gekennzeichnet, dass** die axiale Wanddicke (aa/ai) in radialer Richtung eine unterschiedliche Dicke aufweist, vorzugsweise gegen innen abnehmend in der Dicke ist.

3. Kompensator (1) nach einem der Ansprüche 1 oder 2, **dadurch gekennzeichnet, dass** der Kompensator eine geometrisch bestimmte Formgebung aufweist und eine stabile Bauform hat.

4. Kompensator (1) nach einem der Ansprüche 1 bis 3, **dadurch gekennzeichnet, dass** im flexiblen Bereich (5) mindestens drei flexible Elemente (2) angeordnet sind, vorzugsweise vier bis zwölf flexible Elemente (2).

5. Kompensator (1) nach einem der Ansprüche 1 bis 4, **dadurch gekennzeichnet, dass** die Übergänge bzw. fiktiven Kanten zwischen den Durchmessern und den axial angrenzenden Flächen mittels Radien (R) abgerundet sind.

6. Kompensator (1) nach einem der Ansprüche 1 bis 5, **dadurch gekennzeichnet, dass** der Innendurchmesser (di) des Kompensators konstant über die komplette Länge (L) des Kompensators (1) gleich gross ist.

7. Kompensator (1) nach einem der Ansprüche 1 bis 6, **dadurch gekennzeichnet, dass** die Aussendurchmesser (D) der flexiblen Elemente (2) gleich gross sind.

8. Kompensator (1) nach einem der Ansprüche 1 bis 7, **dadurch gekennzeichnet, dass** der Aussendurchmesser (D) des flexiblen Elementes (2) 1.3 bis1.5-mal dem Aussendurchmesser (d) des Anschlussstutzens (3) entspricht (D = d (1.3 bis 1.5)).

9. Kompensator (1) nach einem der Ansprüche 1 bis 8, **dadurch gekennzeichnet, dass** die radiale Wanddicke (ev) des Verbindungselements 0.5 bis 0.8-mal der Wanddicke (e) des Anschlussstutens (3) entspricht.

10. Kompensator (1) nach einem der Ansprüche 1 bis 9, **dadurch gekennzeichnet, dass** alle Radien (R) gleich gross sind.

11. Kompensator (1) nach einem der Ansprüche 1 bis 10, **dadurch gekennzeichnet, dass** die Beabstandung (b) 0.7 bis 1.7-mal der Wanddicke (e) des Anschlussstutzens entspricht.

12. Kompensator (1) nach einem der Ansprüche 1 bis 11, **dadurch gekennzeichnet, dass** das flexible Element (2) in axialer Richtung durch zwei flexible Wandungen (6) und einen dazwischenliegenden Spalt (s) gebildet ist.

13. Kompensator (1) nach einem der Ansprüche 1 bis 12, **dadurch gekennzeichnet, dass** der Spalt (s) auf der Höhe des Innendurchmessers (di) eine axiale Breite (s) von 0.6 bis 1.6-mal die Wanddicke (e) der Anschlussstutzen (3) aufweist (s = e (0.6 bis 1.6)).

14. Kompensator (1) nach einem der Ansprüche 1 bis 13, **dadurch gekennzeichnet, dass** der Spalt (s) konisch verläuft und gegen den Aussendurchmesser des flexiblen Elements (2) hin abnehmend ist.

## Claims

1. A compensator (1) for connecting two plastic pipeline ends, wherein the compensator has a cylindrical design with different outer diameters, including to connection fittings at the opposite ends (3) with an outer diameter (D) and a wall thickness (e), wherein the outer diameter (D) and the wall thickness (e) correspond to the nominal dimensions of the pipeline ends to be connected, and a flexible region (5) comprises multiple flexible elements (2), which are arranged one after the other and each have a spacing (b) relative to one another, wherein the flexible elements (2) are connected to one another via connecting elements (4), wherein the connecting elements (4) have an outer diameter (dv) and a radial wall thickness (ev), wherein the flexible elements (2) have an outer diameter (D), a radial wall thickness (eb) and an axial wall thickness (aa/ai), wherein the outer diameter (D) of the flexible elements (2) is greater than the outer diameter (D, dv) of the connection fittings (3) and of the connecting elements (4), wherein the compensator (1) is formed integrally and from the same material, wherein the material is plastic,
**characterized in that**
the radial wall thickness (eb) of the flexible element (2) corresponds to 0.1 to 0.16 times the outer diameter (D) of the flexible element (2) (eb = D (0.1 to 0.16)).

2. The compensator (1) according to Claim 1,
**characterized in that**
the axial wall thickness (aa/ai) in the radial direction has a different thickness, preferentially decreasing in the thickness towards the inside.

3. The compensator (1) according to any one of the Claims 1 or 2,
**characterized in that**
the compensator has a geometrically defined and stable design.

4. The compensator (1) according to any one of the Claims 1 to 3,
**characterized in that**
in the flexible region (5) at least three flexible elements (2) are arranged, preferentially four to twelve flexible elements (2).

5. The compensator (1) according to any one of the Claims 1 to 4,
**characterized in that**
the transitions or imaginary edges between the diameters and the axially adjoining surfaces are rounded by means of radii (R).

6. The compensator (1) according to any one of the Claims 1 to 5,
**characterized in that**
the inner diameter (di) of the compensator is constantly of the same size over the complete length (L) of the compensator (1).

7. The compensator (1) according to any one of the Claims 1 to 6,
**characterized in that**
the outer diameters (D) of the flexible elements (2) are identical in size.

8. The compensator (1) according to any one of the Claims 1 to 7,
**characterized in that**
the outer diameter (D) of the flexible element (2) corresponds to 1.3 to 1.5 times the outer diameter (d) of the connection fitting (3) (D = d (1.3 to 1.5)).

9. The compensator (1) according to any one of the Claims 1 to 8,
**characterized in that**
the radial wall thickness (ev) of the connecting element (4) corresponds to 0.5 to 0.8 times the wall thickness (e) of the connection fitting (3).

10. The compensator (1) according to any one of the Claims 1 to 9,
**characterized in that**
all radii (R) are identical in size.

11. The compensator (1) according to any one of the Claims 1 to 10,
**characterized in that**
the spacing (b) corresponds to 0.7 to 1.7 times the wall thickness (e) of the connection fitting.

12. The compensator (1) according to any one of the Claims 1 to 11,
**characterized in that**
the flexible element (2) is formed in the axial direction by two flexible walls (6) and a gap (s) located in between.

13. The compensator (1) according to any one of the Claims 1 to 12,
**characterized in that**
the gap (s) at the height of the inner diameter (di) has an axial width (s) of 0.6 to 1.6 times the wall thickness (e) of the connection fittings (3) (s = e (0.6 to 1.6)).

14. The compensator (1) according to any one of the Claims 1 to 13,
**characterized in that**
the gap (s) extends conically and decreases towards the outer diameter of the flexible element (2).

## Revendications

1. Compensateur (1) destiné à relier deux extrémités de canalisation en matière synthétique, le compensateur ayant une forme de construction cylindrique de différents diamètres extérieurs et comprenant deux raccords aux extrémités opposées (3) d'un diamètre extérieur (d) et d'épaisseur de paroi (e), le diamètre extérieur (d) et l'épaisseur de paroi (e) correspondant aux dimensions nominales des extrémités de canalisation à raccorder, et une zone flexible (5) entre les deux raccords, la zone flexible (5) comportant une pluralité d'éléments flexibles (2) qui sont disposés les uns après les autres et qui présentent chacun un écartement (b) les uns par rapport aux autres, les éléments flexibles (2) étant reliés entre eux par des éléments de liaison (4), les éléments de liaison (4) ayant un diamètre extérieur (dv) et une épaisseur de paroi radiale (ev), les éléments flexibles (2) ayant un diamètre extérieur (D), une épaisseur de paroi radiale (eb) et une épaisseur de paroi axiale (aa/ai), le diamètre extérieur (D) des éléments flexibles (2) étant supérieur au diamètre extérieur (d, dv) des raccords (3) et des éléments de liaison (4), le compensateur (1) étant formé d'une seule pièce à partir d'un seul et même matériau, le matériau étant de la matière synthétique, **caractérisé en ce que** l'épaisseur de paroi radiale (eb) de l'élément flexible (2) correspond, de 0,1 à 0,16 fois, au diamètre extérieur (D) de l'élément flexible (2) (eb = D (0,1 à 0,16)).

2. Compensateur (1) selon la revendication 1, **caractérisé en ce que** l'épaisseur de paroi axiale (aa/ai) a une épaisseur différente dans la direction radiale, de préférence décroissante en épaisseur vers l'intérieur.

3. Compensateur (1) selon l'une des revendications 1 ou 2, **caractérisé en ce que** le compensateur a une forme géométriquement déterminée et a une forme de construction stable.

4. Compensateur (1) selon l'une des revendications 1 à 3, **caractérisé en ce qu'**au moins trois éléments flexibles (2), de préférence quatre à douze éléments flexibles (2), sont disposés dans la zone flexible (5).

5. Compensateur (1) selon l'une des revendications 1 à 4, **caractérisé en ce que** les transitions ou bords fictifs entre les diamètres et les surfaces axialement adjacentes sont arrondis au moyen de rayons (R).

6. Compensateur (1) selon l'une des revendications 1 à 5, **caractérisé en ce que** le diamètre intérieur (di) du compensateur est constant sur toute la longueur (L) du compensateur (1).

7. Compensateur (1) selon l'une des revendications 1 à 6, **caractérisé en ce que** les diamètres extérieurs (D) des éléments flexibles (2) sont de même dimension.

8. Compensateur (1) selon l'une des revendications 1 à 7, **caractérisé en ce que** le diamètre extérieur (D) de l'élément flexible (2) correspond, de 1,3 à 1,5 fois, au diamètre extérieur (d) du raccord (3) (D = d (1,3 à 1,5)).

9. Compensateur (1) selon l'une des revendications 1 à 8, **caractérisé en ce que** l'épaisseur de paroi radiale (ev) de l'élément de liaison correspond, de 0,5 à 0,8 fois, à l'épaisseur de paroi (e) du raccord (3).

10. Compensateur (1) selon l'une des revendications 1 à 9, **caractérisé en ce que** tous les rayons (R) sont de même dimension.

11. Compensateur (1) selon l'une des revendications 1 à 10, **caractérisé en ce que** l'espacement (b) correspond, de 0,7 à 1,7 fois, à l'épaisseur de paroi (e) du raccord.

12. Compensateur (1) selon l'une des revendications 1 à 11, **caractérisé en ce que** l'élément flexible (2) est formé dans la direction axiale par deux parois flexibles (6) et un interstice (s) entre elles.

13. Compensateur (1) selon l'une des revendications 1 à 12, **caractérisé en ce que** l'interstice (s) au niveau du diamètre intérieur (di) a une largeur axiale (s) de 0,6 à 1,6 fois l'épaisseur de paroi (e) du raccord (3) (s = e (0,6 à 1,6)).

14. Compensateur (1) selon l'une des revendications 1 à 13, **caractérisé en ce que** l'interstice (s) est conique et diminue vers le diamètre extérieur de l'élément flexible (2).
